# EUROPÄISCHE PATENTSCHRIFT

(11) **EP 1 654 967 B1**
(45) Veröffentlichungstag und Bekanntmachung des Hinweises auf die Patenterteilung: **23.04.2008**
(21) Anmeldenummer: 04026151.3
(22) Anmeldetag: 04.11.2004
(51) Int. Cl.: A47J 31/40

(54) **Brühgruppe für eine Kaffeemaschine**
Brewing unit for a coffee machine
Groupe d'infusion pour une machine à café

(43) Veröffentlichungstag der Anmeldung: 10.05.2006
(73) Patentinhaber: NIRO-PLAN AG, 4663 Aarburg (CH)
(72) Erfinder: Greiwe, Hansdieter, 97944 Boxberg (DE)
(74) Vertreter: Blumenröhr, Dietrich

(56) Entgegenhaltungen:
- EP-A- 0 192 797
- EP-A- 0 564 399
- CH-A- 521 115
- CH-A- 590 041
- CH-A- 596 810
- US-A- 4 934 258

## Beschreibung

Die Erfindung betrifft eine Brühgruppe für eine insbesondere vollautomatische Kaffeemaschine mit einem Brühzylinder mit vertikaler Zylinderachse, der durch einen unteren Hubkolben und einen oberen Hubkolben verschließbar ist.

Brühgruppen für vollautomatische Kaffeemaschinen gibt es in verschiedenen Ausführungen. Beispielsweise eine von der Anmelderin vertriebene Kaffeemaschine ist derart aufgebaut, dass der untere Hubkolben während des Einfüllens des Kaffeemehls und während des Aufbrühens des Kaffees am unteren Ende des Brühzylinders angeordnet ist, wohingegen er für das Auswerfen des Kaffeesatzes bis zum oberen Ende des Brühzylinders soweit verfahrbar ist, dass er in etwa fluchtend mit der Oberkante des Brühzylinders angeordnet ist. In dieser Stellung wird ein Abstreifer betätigt, der den Kaffeesatz in seitlicher Richtung in einen dort angeordneten Kaffeesatzbehälter auswirft.

Bei dieser bekannten Bauform ist der Abstreifer an einem schwenkbaren Kaffeemehleinfülltrichter angeordnet, der nach dem Auswerfen des Kaffeesatzes so über dem Brühzylinder positioniert wird, dass das Kaffeemehl - nach dem Absenken des unteren Hubkolbens bis zum unteren Brühzylinderende - einigermaßen gleich im den Brühraum bildenden unteren Brühzylinderbereich (oberhalb des unteren Hubkolbens) verteilt wird. Um schließlich diesen Brühraum während des Aufbrühens des Kaffees nach oben abzudichten, wird zunächst der Einfülltrichter mit Abstreifer seitlich nach außen verfahren, so dass der oberhalb hiervon angeordnete obere Hubkolben frei nach unten in den Brühzylinder hinein verfahren kann.

Aus der CH-A 521115 ist eine Kaffeemaschine bekannt, bei der ein unterer und ein oberer Hubkolben über seitliche Führungsstangen aneinander gekoppelt sind. Durch getrennte Ansteuerung der beiden Hubkolben können diese gemeinsam oder getrennt verfahren werden. Auch aus der CH-A 590041 ist eine Kaffeemaschine mit einem oberen und einem unteren Hubkolben bekannt, wobei diese Hubkolben über diverse Kolbenstangen und Bügel so aneinander koppelbar sind, dass sie unter Beibehaltung ihres Abstands gemeinsam verfahren werden können. Dabei ist aber der Bereich zwischen den beiden Hubkolben sehr beengt und erschwert damit das Zuführen frischen Kaffeepulvers und das Entfernen des Kaffeesatzes.

Obwohl diese bekannten Brühgruppen schon sehr ausgereift sind und an sich problemlos funktionieren, besteht auch weiterhin das Bedürfnis, die Brühgruppe selbst und auch das Brühverfahren noch einfacher auszugestalten und die Brühgruppe dahingehend noch einmal zu verbessern, dass die Herstellkosten und der Wartungsaufwand reduziert werden.

Diese Aufgabe wird bei einer Brühgruppe der eingangs genannten Art gelöst durch die Merkmale des Anspruchs 1.

Hierdurch ergibt sich zunächst einmal der wesentliche Vorteil, dass ein gemeinsamer Antrieb und eine gemeinsame Ansteuerung des erfindungsgemäßen Doppelhubkolbens möglich sind, die den Aufbau der Brühgruppe deutlich vereinfachen. Dadurch dass die beiden Hubkolben des Doppelhubkolbens einen gleichbleibenden Abstand zueinander in jeder Phase des Brüh- und Reinigungsverfahrens aufweisen können, ist mit dieser Zwangskopplung auch kein Nachteil verbunden. Im Gegenteil, es lassen sich durch diese feste Zuordnung dieser beiden Hubkolben eine große Anzahl weiterer Vorteile erzielen, die nachfolgend näher beschrieben werden sollen:

Der Doppelhubkolben ist zwischen zumindest einer oberen Kaffeemehldosierstellung, einer mittleren Brühstellung und einer unteren Kaffeeauswurfstellung verfahrbar, so dass jedem einzelnen Verfahrensschritt dadurch optimal genügt werden kann, dass der Doppelkolben in einer bestimmten vertikalen Position relativ zum Brühzylinder angeordnet ist. So verschließt der Doppelhubkolben beispielsweise einen als Brühraum fungierenden Teilbereich des Brühzylinders in der Brühstellung im Wesentlichen nach oben und unten, lediglich Brühwasser- , Luft- und /oder Kaffeezuführ- bzw. -abführleitungen, die dem Doppelhubkolben zugeordnet sind, sorgen für ein gesteuertes Unterbrechen dieses Verschlusses.

Aber auch in der Kaffeemehldosierstellung verschließt zweckmäßigerweise der Doppelhubkolben den Brühzylinder nach oben und unten, was dadurch ermöglicht wird, dass der Brühzylinder eine insbesondere durch den Doppelhubkolben verschließbare Kaffeemehleinfüllöffnung aufweist. Diese Kaffeemehleinfüllöffnung ist in der Umfangswand des Brühzylinders so angeordnet, dass sie bei in der Brühstellung befindlichem Doppelhubkolben von dem oberen Hubkolben entweder direkt oder über einen oberhalb angefügten Verschluss verschlossen wird. Dies führt zum einen zu weniger Aromaverlust, da das aus einem angeschlossenen Kaffeemehldosierer oder einer angeschlossenen Kaffeemühle kommende und an dieser Öffnung anliegende Kaffeemehl gegenüber der Umgebungsluft zwangsweise abgeschottet wird. Zum anderen wird eine Kaffeemehlstaubablage im Gerät insbesondere oberhalb des oberen Hubkolbens vermieden, da kein Kaffeemehl aus dem Kaffeemehldosierer bzw. der Kaffeemühle durch die Kaffeemehleinfüllöffnung austreten kann.

In der Kaffeemehldosierstellung hingegen befindet sich der obere Hubkolben des Doppelhubkolbens oberhalb der Kaffeemehleinfüllöffnung und gibt somit den Bereich des Brühzylinders zwischen oberem Hubkolben und unterem Hubkolben für das Einfüllen des Kaffeemehls in den späteren Brühraum frei. Dadurch dass auch in dieser Stellung der obere Hubkolben dafür sorgt, dass der Brühzylinder nach oben abgedichtet ist, können Verunreinigungen des Brühzylinders durch herabfallende Teilchen vermieden werden. Und in umgekehrter Richtung wird auch vermieden, dass Kaffeemehl beim Einfüllen in den Brühzylinder in Umgebungsbereiche des Brühzylinders gelangt.

Das Verschließen des Brühzylinders nach oben durch den oberen Hubkolben ist auch aus einem weiteren Grund wichtig: Zweckmäßigerweise weist der Brühzylinder eine Reinigungsmitteleinfüllöffnung auf, die insbesondere in einem Umfangsbereich oberhalb der Kaffeemehleinfüllöffnung angeordnet ist, so dass ebenfalls durch den oberen Hubkolben verhindert werden kann, dass unbeabsichtigt Reinigungsmittel in den Brühzylinder fällt. Soll hingegen der Brühzylinder bzw. der Brühraum mit einem Reinigungsmittel gereinigt werden, so kann der Doppelhubkolben über die Kaffeemehldosierstellung hinaus nach oben in eine Reinigungsmitteldosierstellung verfahren werden; in dieser Stellung wird das Reinigungsmittel eingefüllt, der Doppelhubkolben anschließend nach unten bis insbesondere in die Brühstellung verfahren und der Reinigungsvorgang durchgeführt.

Ein weiterer wesentlicher Aspekt der vorliegenden Erfindung liegt darin, dass der Doppelhubkolben zum Auswerfen des Kaffeesatzes nach unten zumindest teilweise aus dem Brühzylinder heraus in die Kaffeeauswurfstellung verfahrbar ist, so dass der Kaffeesatz durch einen im Bereich unterhalb des Brühzylinders angeordneten Abstreifer direkt in einen in bzw. unter diesem Bereich angeordneten Kaffeesatzbehälter auswerfbar ist. Der Vorteil eines Auswerfens des Kaffeesatzes unterhalb des Brühzylinders bzw. nach unten in einen unterhalb des Brühzylinders angeordneten Kaffeesatzbehälter liegt vor allem darin, dass dieser Kaffeesatzbehälter gleichzeitig als Auffangbehälter für etwaige Kaffeereste oder sonstige durch Undichtigkeiten abgelagerte Teilchen dienen kann.

Werden also durch die weiter oben beschriebenen Merkmale insbesondere Verunreinigungen überhaupt vermieden, so führt diese Anordnung des Kaffeesatzbehälters unterhalb des Brühzylinders und auch das Verfahren des Doppelhubkolbens aus dem Brühzylinderbereich hinaus nach unten in die Kaffeeauswurfstellung dazu, dass weiterer Wartungsaufwand durch den vorgegebenen Auffangbereich für Verunreinigungen reduziert wird. Schließlich kann auch die Brühgruppe durch Überflutung im Außenbereich optimal gereinigt werden, was zu einer Verbesserung der hygienischen Verhältnisse führt.

Was nun den oberen und unteren Hubkolben betrifft, so können diese in zumindest teilweise an sich bekannter Weise wie folgt ausgebildet sein: Der untere Hubkolben kann ein Filterelement aufweisen, durch das der aufgebrühte Kaffee filterbar ist, wobei zweckmäßigerweise im unteren Hubkolben unterhalb des Filterelements ein mit einer Kaffeeablaufleitung verbundener Kaffeeauffangraum für den gefilterten Kaffee angeordnet ist. Der obere Hubkolben hingegen kann eine Brühwassereinlassöffnung mit insbesondere unterhalb dieser Brühwassereinlassöffnung angeordnetem Wasserverteilelement aufweisen. Schließlich dient die Lufteinlassöffnung zum Einführen von Druckluft, die den gebrühten Kaffee dadurch abfiltert, dass sie den gebrühten Kaffee durch das im unteren Hubkolben angeordnete Filterelement drückt, wo der gefilterte Kaffee sich im Kaffeeauffangraum sammelt und diesen durch die Kaffeeablaufleitung verlässt. Das Verdrängen des Kaffees aus dem Brühraum führt aber nicht nur zum Abfiltern des gebrühten Kaffees, sondern auch noch zum Trocknen des Kaffeesatzes, indem etwaiger sonst im Kaffeesatz verbleibender Kaffee mittels Luft- oder Dampfdruck abgefiltert wird und ebenfalls den Brühraum durch das Filterelement, den Kaffeeauffangraum und die Kaffeeablaufleitung verlässt. Als Ergebnis erhält man einen getrockneten Kaffeesatz, der als Kaffeesatztablette einfacher handhabbar und dadurch mit Hilfe des Abstreifers in der Kaffeeauswurfstellung besser von der Oberseite des unteren Hubkolbens entfernbar ist. Etwaige bei diesem Auswerfen des Kaffeesatzes verbliebene Kaffeesatzreste können anschließend durch ein Abduschen des Filtersiebs sowie des unteren Hubkolbens entfernt werden.

Ein wesentlicher Vorteil dieser Bauformen der oberen und unteren Hubkolben lässt sich dadurch erzielen, dass die Kaffeeablaufleitung von dem im unteren Hubkolben angeordneten Auffangraum nach oben durch den oberen Hubkolben verläuft, so dass sich also alle drei Anschlussleitungen (Kaffeeablauf, Brühwasserzulauf und Druckluftzuführung) im Wesentlichen im Bereich oberhalb des oberen Hubkolbens erstrecken, so dass unterhalb des unteren Hubkolbens und insbesondere im Bereich unter dem Brühzylinder keine Versorgungsleitungen erforderlich sind, die beispielsweise das Auswerfen des Kaffeesatzes stören würden oder sonst leicht verunreinigt oder in sonstiger Weise gestört werden könnten und entsprechend regelmäßig gereinigt werden müssten.

Hierdurch und durch den erfindungsgemäßen Aufbau des Doppelhubkolbens erhält man insgesamt eine Brühgruppe mit äußerst geringer Bauhöhe, was den Aufbau von kleinen, kompakten und leistungsfähigen Kaffeemaschinen ermöglicht.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: eine erfindungsgemäße Brühgruppe für eine Kaffeemaschine in einer Grundstellung in Seitenansicht;
- Figur 2: die Brühgruppe aus Figur 1 mit in einer oberen Kaffeemehldosierstellung befindlichem Doppelhubkolben;
- Figur 3: die Brühgruppe aus Figur 1 mit in einer mittleren Brühstellung befindlichem Doppelhubkolben während des Brühvorgangs;
- Figur 4: die Brühgruppe aus Figur 1 in der in Figur 3 bereits dargestellten mittleren Brühstellung beim Abfiltern des Kaffees; und
- Figur 5: die Brühgruppe aus Figur 1 mit in einer unteren Kaffeeauswurfstellung befindlichem Doppelhubkolben.

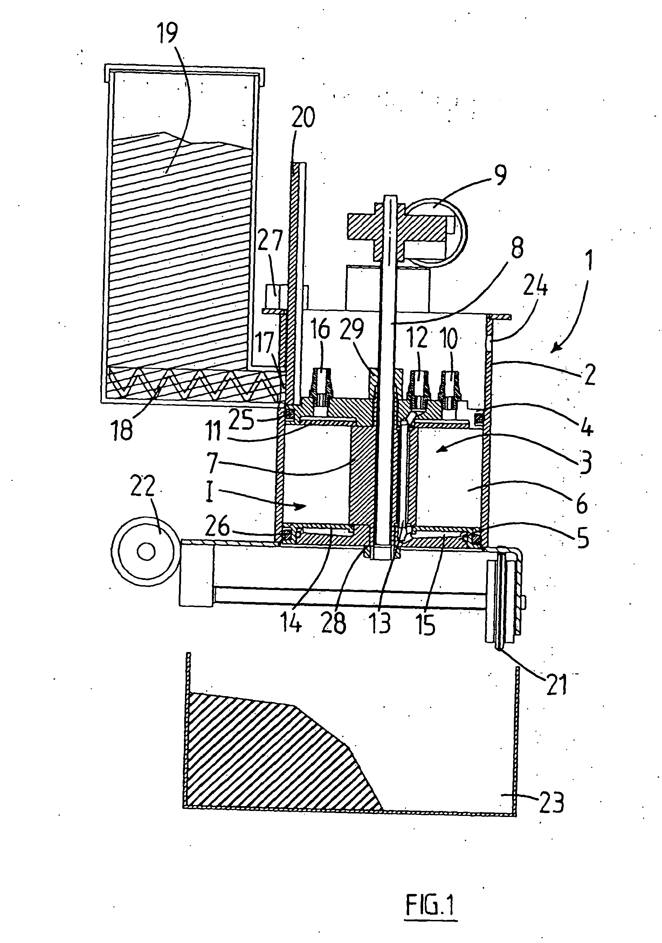

In Figur 1 ist eine Brühgruppe 1 in Seitenansicht dargestellt, die einen rohrförmigen Brühzylinder 2 mit vertikaler Zylinderachse und kreisförmigem Querschnitt aufweist, in welchem ein Doppelhubkolben 3 in Vertikalrichtung verfahrbar angeordnet ist. Der Doppelhubkolben besteht aus einer oberen Hubkolbenplatte 4 und einer unteren Hubkolbenplatte 5, die zwischen sich einen von dem Brühzylinder 2 umschlossenen Brühraum 6 bilden. Die obere Hubkolbenplatte 4 und die untere Hubkolbenplatte 5 des Doppelhubkolbens 3 sind über eine gemeinsame Gewindehülse 7 in festem Abstand zueinander verbunden und festgelegt, wobei diese Gewindehülse 7 von einer Gewindespindel 8 durchquert wird, die für die Hubbewegung des Doppelhubkolbens 3 sorgt, indem sie über einen Getriebemotor 9 in Rotation versetzt werden kann und so den Doppelkolben in Vertikalrichtung bewegt.

Die obere Hubkolbenplatte 4 weist einen Brühwasseranschluss 10 zum Einleiten des Brühwassers B durch die obere Hubkolbenplatte in den darunterliegenden Brühraum 6 auf, wobei das den Brühwasseranschluss 10 verlassende Brühwasser B durch eine Wasserverteilerplatte 11 über den Brühraum verteilt wird. Des Weiteren ist in der oberen Hubkolbenplatte 4 ein Kaffeeauslaufanschluss 12 vorgesehen, der über eine Kaffeeauslaufleitung 13 mit der unteren Hubkolbenplatte 5 verbunden ist.

Diese untere Hubkolbenplatte 5 weist an ihrer Oberseite eine Filterfolie 14 auf, die zum Filtern des aufgebrühten Kaffees dient. Unterhalb der Filterfolie 14 ist schließlich ein Kaffeeauffangraum 15 in der unteren Hubkolbenplatte 5 vorgesehen, die an die Kaffeeauslaufleitung 13 angeschlossen ist und so den gefilterten Kaffee von der unteren Hubkolbenplatte 5 durch die Kaffeeauslaufleitung 13 und den Kaffeeauslaufanschluss 12 transportieren kann.

Der Transport des gebrühten Kaffees erfolgt bei der vorliegenden Kaffeemaschinenbauform dadurch, dass die obere Hubkolbenplatte 4 einen Druckluftleitungsanschluss 16 aufweist, durch den Druckluft durch die obere Hubkolbenplatte 4 in den Brühraum strömen kann und hierbei den aufgebrühten Kaffee aus dem Brühraum unter Durchquerung des Filters bzw. der Filterfolie 14 in den Kaffeeauffangraum 15 verdrängen und von dort über die Kaffeeauslaufleitung 13 aus dem Brühzylinder hinaus bis in die Tasse des Kaffeemaschinenbenutzers fördern kann.

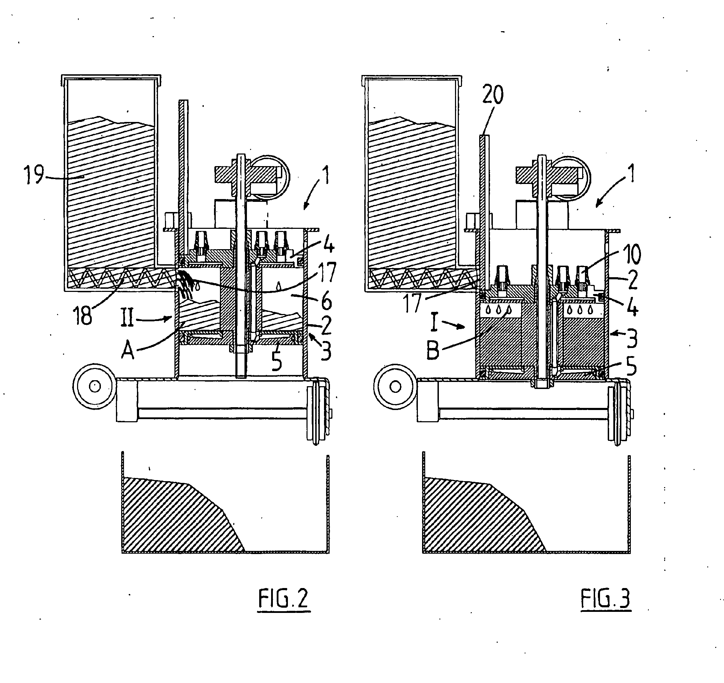

Die weiteren Einzelheiten der erfindungsgemäßen Brühgruppe werden nachfolgend je nach Verfahrensschritt des Brühverfahrens beschrieben, wobei in jeder der dargestellten Zeichnungen gleiche Bauteile mit den gleichen Bezugszeichen versehen sind bzw. in den Figuren 2 bis 5 nur die jeweils in dieser Zeichnung besonders relevanten Bauteile gekennzeichnet sind, während die restlichen ungekennzeichneten Bauteile der Kennzeichnung aus Figur 1 entsprechen.

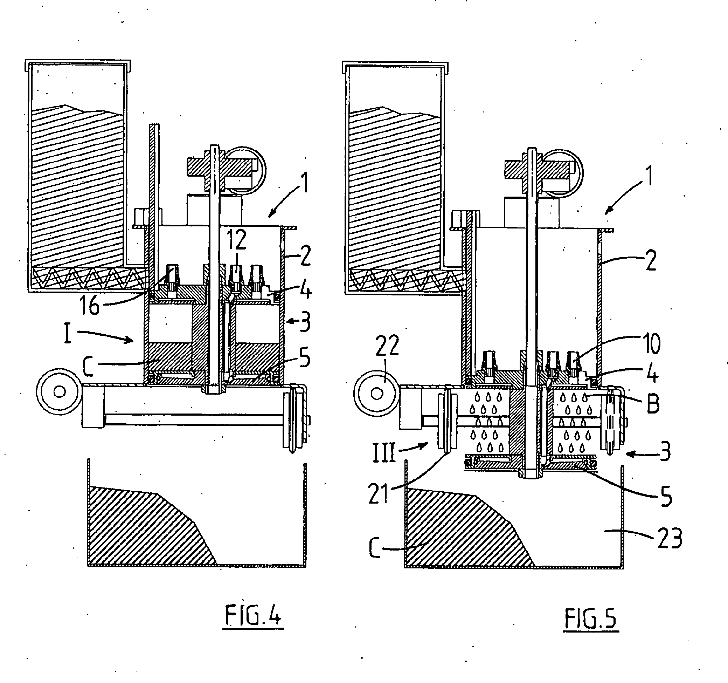

Während in Figur 1 die Grundstellung I des Doppelhubkolbens dargestellt ist, die von ihrer Höhenposition her auch den Verfahrensschritten aus den Figuren 3 und 4 entspricht, befindet sich der Doppelhubkolben 3 in Figur 2 in einer Kaffeemehldosierstellung II etwas oberhalb der Grundstellung I und zwar so hoch, dass die obere Hubkolbenplatte 4 oberhalb einer Kaffeemehleinfüllöffnung 17 angeordnet ist. Diese Kaffeemehleinfüllöffnung 17 verbindet über eine direkte Dosiereinheit 18 einen Kaffeemehlvorratsbehälter 19 oder eine an gleicher Position befindliche Kaffeemühle mit der Brühkammer 6 und sorgt so dafür, dass keine weiteren Bauteile von dem Kaffeemehl A bei dessen Weiterleiten beaufschlagt und gegebenenfalls durch Hängenbleiben des Kaffeemehls verschmutzt werden können.

Nach dem Dosieren des Kaffeemehls A in den Brühraum 6 fährt der Doppelhubkolben wieder nach unten in die Grundstellung I, die der Brühstellung entspricht und in Figur 3 dargestellt ist. Dort erkennt man, wie die Kaffeemehleinfüllöffnung 17 über ein an der oberen Hubkolbenplatte 4 angeordnetes Schließblech 20 insbesondere spielfrei verschlossen wird, um einerseits Aromaverluste und andererseits ein Verschmutzen der Oberseite der oberen Hubkolbenplatte zu vermeiden.

In der Brühstellung I gemäß Figur 3 wird durch den Brühwasseranschluss 10 Brühwasser in den Brühraum 6 geleitet und der Brühvorgang entsprechend der beabsichtigten Brühzeit gestartet. Nach Ablauf der gewünschten Brühzeit wird Druckluft über den Druckluftanschluss 16 in den Brühraum geleitet, der aufgebrühte Kaffee durch die Filterfolie 14 in den Kaffeeauffangraum 15 und von dort über die Kaffeeauslaufleitung 13 und den Kaffeeauslaufanschluss 12 weiter bis hin zur Kaffeetasse befördert. Während des in Figur 4 dargestellten Beaufschlagens des Brühraums mit Druckluft wird nicht nur der aufgebrühte Kaffee abgefiltert und aus dem Brühraum gefördert, sondern auch gleichzeitig wird der im Bodenbereich des Brühraums abgesetzte Kaffeesatz C getrocknet und zu einer Kaffeesatztablette geformt.

Anschließend wird der Doppelhubkolben 3 aus der Brühstellung I gemäß Figur 4 in eine untere Kaffeeauswurfstellung III gemäß Figur 5 gefahren, in der die Unterseite der oberen Hubkolbenplatte 4 mit dem unteren Rand des Brühzylinders 2 fluchtet. Ein unterhalb des Brühzylinders angeordneter Abstreifer 21 wird über einen eigenen Motor 22 in Horizontalrichtung bewegt und streift so den Kaffeesatz C von der Filterfolie 14 der unteren Hubkolbenplatte 5 ab und wirft den Kaffeesatz C in einen unterhalb des Brühzylinders und des Abstreifers angeordneten Kaffeesatzbehälter 23. Anschließend wird noch die Filterfolie 14 mit Hilfe des über den Brühwasseranschluss 10 zuführbaren Brühwassers B abgeduscht und gereinigt. Der Abstreifer 21 fährt wieder zurück in seine in Figur 5 rechts gestrichelt dargestellte Ausgangsstellung und der Doppelhubkolben 3 fährt in die in Figur 1 dargestellte Grundstellung I, in der die Brühgruppe bereit für den nächsten Brühvorgang ist.

Um ein gleichmäßiges Abstreifen des Kaffeesatzes mit Hilfe des Abstreifers 21 zu ermöglichen, ist zum einen die Gewindehülse 7, die die obere und die untere Hubkolbenplatte miteinander verbindet, im Horizontalschnitt in etwa elliptisch und in horizontaler Querrichtung, also relativ zu der Ebene des Zeichnungsblattes nach vorne bzw. hinten sehr flach ausgebildet und der Abstreifer 21 ist zweigeteilt, um vor und hinter der Gewindehülse 7 den sich um die Gewindehülse 7 erstreckenden Kaffeesatz C in zwei Hälften abstreifen zu können.

In der Zeichnung ist noch eine Reinigungsmitteleinfüllöffnung 24 am oberen Ende des Brühzylinders 2 dargestellt, die in allen in der Zeichnung dargestellten Stellungen des Doppelhubkolbens jeweils durch die obere Hubkolbenplatte 4 vom Brühraum 6 abgeschottet ist, wodurch ein Beaufschlagen des Brühraums durch das Reinigungsmittel verhindert wird. Lediglich wenn der Doppelhubkolben in die (nicht dargestellte) Reinigungsmitteldosierstellung verfahren werden soll, erstreckt sich die obere Hubkolbenplatte 4 oberhalb dieser Reinigungsmitteleinfüllöffnung 24 und gibt den Zugang des Reinigungsmittels in den Brühraum 6 frei.

Es sei schließlich noch erwähnt, dass die obere Hubkolbenplatte und die untere Hubkolbenplatte jeweils über O-Ring-Dichtungen 25, 26 an der inneren Umfangswandung des Brühzylinders 2 anliegen und so die gewünschte Abdichtung herstellen. Darüber hinaus ist am oberen Ende des Brühzylinders 2 eine Verdrehsicherung 27 angeordnet, die mit der Verschlussblende 20 zusammenwirkt und so die Drehposition des Doppelhubkolbens vor allem während der vertikalen Hubbewegungen sicherstellt.

Aus der Zeichnung ist ebenfalls gut erkennbar, wie die untere Hubkolbenplatte 5 über eine Schraubenmutter 28 und die obere Hubkolbenplatte 4 über eine Schraubenmutter 29 an der zentralen Gewindehülse 7 festgelegt sind, so dass der gesamte Doppelhubkolben in einfacher Weise zerlegt werden kann, wenn Einzelteile ausgewechselt, gewartet oder begutachtet werden müssen. Am relevantesten ist diese Möglichkeit für den Wechsel der Filterfolie 14: Ohne irgendwelche Leitungselemente zuvor entfernen zu müssen, muss ganz einfach die untere Schraubenmutter 28 geöffnet und die untere Hubkolbenplatte 5 vom Doppelhubkolben 3 abgezogen werden und schon ist die Filterfolie 14 offen zugänglich und kann ausgetauscht werden.

Zusammenfassend bietet die vorliegende Erfindung die Vorteile, durch Verwendung eines Doppelhubkolbens nicht zwei getrennt voneinander verfahrbare und ansteuerbare Hubkolben vorsehen zu müssen. Der Doppelhubkolben bildet einen vorgegebenen Brühraum, der - je nach Verfahrensschritt - entweder vollkommen gegenüber der Umgebung abgedichtet ist oder der Kaffeemehleinfüllöffnung zugewandt ist oder sich beispielsweise bis unter den Brühzylinder erstrecken kann, um dort von einem Abstreifer beaufschlagt zu werden. Hierdurch muss der Doppelhubkolben nur in einer Hinsicht (also quasi mit nur einem Freiheitsgrad) angesteuert werden, nämlich je nach Verfahrensschritt eine andere Vertikalposition einnehmen, während die sonstigen beim Brühen benötigten Funktionen entweder selbsttätig, zum Beispiel durch zwangsweises bzw. automatisches Verschließen der Kaffeemehleinfüllöffnung, erfolgen können oder problemlos an die jeweilige Vertikalstellung des Doppelhubkolbens steuerungstechnisch gekoppelt werden können, wie etwa das Abstreifen bei Erreichen der Kaffeeauswurfstellung.

Da außerdem die Verunreinigung der gesamten Brühgruppe deutlich reduziert bzw. der Verunreinigungsbereich auf den Bereich des Kaffeesatzbehälters beschränkt werden kann, lassen sich auch die Wartungskosten und der Wartungsaufwand herabsetzen. Gleiches gilt beispielsweise für einen Filterwechsel, der ganz einfach durch Abschrauben der unteren Hubkolbenplatte erfolgen kann, ohne dass hier irgendwelche Steuer- oder Durchflussleitungen zuvor entfernt werden müssten. Demgemäß befinden sich unterhalb der unteren Hubkolbenplatte nur der Abstreifer und der Kaffeesatzbehälter, so dass mangels sensibler Bauteile in diesem Nassbereich auch weitere Störungsmöglichkeiten ausgeschlossen sind. Schließlich ermöglicht die geringe Bauhöhe der erfindungsgemäßen Brühgruppe den Aufbau von kleinen, kompakten und leistungsfähigen Kaffeemaschinen.

## Patentansprüche

1. Brühgruppe für eine Kaffeemaschine mit einem Brühzylinder (2) mit vertikaler Zylinderachse, der durch einen unteren Hubkolben (5) und einen oberen Hubkolben (4) verschließbar ist, wobei
der untere Hubkolben (5) und der obere Hubkolben (4) zu einem Doppelhubkolben (3) miteinander verbunden sind, wobei sie in festem Abstand zueinander festgelegt und gemeinsam verfahrbar sind, **dadurch gekennzeichnet, dass** der obere Hubkolben (4) eine Lufteinlassöffnung (16) zum Abfiltern des gebrühten Kaffees mittels Luft- und Dampfdruck und zum Trocknen des Kaffeesatzes aufweist.

2. Brühgruppe nach zumindest Anspruch 1,
**dadurch gekennzeichnet,**
**dass** der Doppelhubkolben (3) zwischen zumindest einer oberen Kaffeemehldosierstellung (II), einer mittleren Brühstellung (I) und einer unteren Kaffeeauswurfstellung (III) verfahrbar ist.

3. Brühgruppe nach zumindest Anspruch 2,
**dadurch gekennzeichnet,**
**dass** der Doppelhubkolben (3) einen als Brühraum (6) fungierenden Teilbereich des Brühzylinders (2) in der Brühstellung (I) im Wesentlichen nach oben und unten verschließt.

4. Brühgruppe nach zumindest einem der Ansprüche 2 oder 3,
**dadurch gekennzeichnet,**
**dass** der Doppelhubkolben (3) den Brühzylinder (2) in der Kaffeemehldosierstellung (II) nach oben und unten verschließt.

5. Brühgruppe nach zumindest einem der vorstehenden Ansprüche,
**dadurch gekennzeichnet,**
**dass** der Brühzylinder (2) eine insbesondere durch den Doppelhubkolben (3) verschließbare Kaffeemehleinfüllöffnung (17) aufweist.

6. Brühgruppe nach zumindest einem der Ansprüche 2 bis 5,
**dadurch gekennzeichnet,**
**dass** der Doppelhubkolben (3) zum Auswerfen des Kaffeesatzes (C) nach unten zumindest teilweise aus dem Brühzylinder (2) heraus in die Kaffeeauswurfstellung (III) verfahrbar ist.

7. Brühgruppe nach zumindest Anspruch 6,
**dadurch gekennzeichnet,**
**dass** im Bereich unterhalb des Brühzylinders (2) ein Abstreifer (21) angeordnet und betätigbar ist.

8. Brühgruppe nach zumindest Anspruch 1 oder Anspruch 5,
**dadurch gekennzeichnet,**
**dass** der Brühzylinder (2) eine Reinigungsmitteleinfüllöffnung (24) aufweist, die insbesondere in einem Umfangsbereich oberhalb der Kaffeemehleinfüllöffnung (17) angeordnet ist.

9. Brühgruppe nach zumindest einem der Ansprüche 2 bis 8,
**dadurch gekennzeichnet,**
**dass** der Doppelhubkolben (3) über die Kaffeemehldosierstellung (II) hinaus nach oben in eine Reinigungsmitteldosierstellung verfahrbar ist.

10. Brühgruppe nach zumindest einem der vorstehenden Ansprüche,
**dadurch gekennzeichnet,**
**dass** der untere Hubkolben (5) ein Filterelement (14) aufweist, durch das der aufgebrühte Kaffee filterbar ist, und dass im unteren Hubkolben unterhalb des Filterelements ein mit einer Kaffeeablaufleitung (13) verbundener Kaffeeauffangraum (15) für den gefilterten Kaffee angeordnet ist.

11. Brühgruppe nach zumindest Anspruch 10,
**dadurch gekennzeichnet,**
**dass** die Kaffeeablaufleitung (13) von dem im unteren Hubkolben (5) angeordneten Kaffeeauffangraum (15) nach oben durch den oberen Hubkolben (4) verläuft.

12. Brühgruppe nach zumindest einem der vorstehenden Ansprüche,
**dadurch gekennzeichnet,**
**dass** der obere Hubkolben (4) eine Brühwassereinlassöffnung (10) und/oder ein Wasserverteilelement (11) aufweist.

## Claims

1. Brewing assembly for a coffee machine, having a brewing cylinder (2) with a vertical cylinder axis, which is closable by a lower plunger (5) and an upper plunger (4), the lower plunger (5) and the upper plunger (4) being joined to one another to form a double plunger (3), the plungers being spaced a fixed distance apart from one another and being movable together, **characterised in that** the upper plunger (4) has an air-inlet opening (16) for filtering the brewed coffee by means of air pressure and steam pressure and for drying the coffee grounds.

2. Brewing assembly according to at least claim 1,
**characterised in that**
the double plunger (3) is movable between at least an upper ground coffee dispensing position (II), a middle brewing position (I) and a lower coffee discharge position (III).

3. Brewing assembly according to at least claim 2,
**characterised in that**
in the brewing position (I) the double plunger (3) substantially closes a sub-region of the brewing cylinder (2), which acts as brewing chamber (6), towards the top and bottom.

4. Brewing assembly according to at least one of claims 2 and 3,
**characterised in that**
in the ground coffee dispensing position (II) the double plunger (3) closes the brewing cylinder (2) towards the top and bottom.

5. Brewing assembly according to at least one of the preceding claims,
**characterised in that**
the brewing cylinder (2) has a ground coffee filling opening (17) which is closable especially by the double plunger (3).

6. Brewing assembly according to at least one of claims 2 to 5,
**characterised in that**
for discharging the coffee grounds (C) the double plunger (3) is movable downwards at least partially out of the brewing cylinder (2) into the coffee discharge position (III).

7. Brewing assembly according to at least claim 6,
**characterised in that**
a scraper (21) is arranged and is actuable in the region below the brewing cylinder (2).

8. Brewing assembly according to at least claim 1 or claim 5,
**characterised in that**
the brewing cylinder (2) has a cleaning agent filling opening (24) which is arranged especially in a peripheral region above the ground coffee filling opening (17).

9. Brewing assembly according to at least one of claims 2 to 8,
**characterised in that**
the double plunger (3) is movable upwards beyond the ground coffee dispensing position (II) into a cleaning agent dispensing position.

10. Brewing assembly according to at least one of the preceding claims,
**characterised in that**
the lower plunger (5) has a filter element (14) through which the brewed coffee is filterable, and in the lower plunger, below the filter element, there is arranged a coffee collection chamber (15) for the filtered coffee, which chamber is connected to a coffee outflow line (13).

11. Brewing assembly according to at least claim 10,
**characterised in that**
the coffee outflow line (13) runs upwards through the upper plunger (4) from the coffee collection chamber (15) arranged in the lower plunger (5).

12. Brewing assembly according to at least one of the preceding claims,
**characterised in that**
the upper plunger (4) has a brewing water inlet opening (10) and/or a water-distributing element (11).

## Revendications

1. Groupe d'infusion pour une machine à café avec un cylindre d'infusion (2) doté d'un axe de cylindre vertical qui peut être fermé par un piston élévateur (5) inférieur et un piston élévateur (4) supérieur, le piston élévateur (5) inférieur et le piston élévateur (4) supérieur étant reliés pour former un piston à double course (3), ceux-ci étant définis à écart fixe l'un par rapport à l'autre et pouvant être déplacés ensemble, **caractérisé en ce que** le piston élévateur (4) supérieur présente une ouverture d'entrée d'air (16) pour filtrer le café infusé au moyen de pression d'air et de vapeur, ainsi que pour sécher le marc de café.

2. Groupe d'infusion selon au moins la revendication 1, **caractérisé en ce que** le piston à double course (3) peut être déplacé entre au moins une position de dosage de café en poudre supérieure (II), une position d'infusion (I) médiane et une position de sortie de café (III).

3. Groupe d'infusion selon au moins la revendication 2, **caractérisé en ce que** le piston à double course (3) ferme essentiellement vers le haut et le bas une zone partielle du cylindre d'infusion (2) servant d'espace d'infusion (6) en position d'infusion (I).

4. Groupe d'infusion selon au moins l'une quelconque des revendications 2 ou 3, **caractérisé en ce que** le piston à double course (3) ferme vers le haut et le bas le cylindre d'infusion (2) dans la position de dosage de café en poudre (II).

5. Groupe d'infusion selon au moins l'une quelconque des revendications précédentes, **caractérisé en ce que** le cylindre d'infusion (2) présente une ouverture de remplissage de café en poudre (17) pouvant être fermée en particulier par le piston à double course (3).

6. Groupe d'infusion selon au moins l'une quelconque des revendications 2 à 5, **caractérisé en ce que** le piston à double piston (3) peut être déplacé vers le bas au moins partiellement du cylindre d'infusion (2) dans la position de sortie de café (III) pour sortir le marc de café (C).

7. Groupe d'infusion selon au moins la revendication 6, **caractérisé en ce qu'**une racle (21) est disposée et peut être actionnée dans la zone au-dessous du cylindre d'infusion (2).

8. Groupe d'infusion selon au moins la revendication 1 ou 5, **caractérisé en ce que** le cylindre d'infusion (2) présente une ouverture de remplissage de produit de nettoyage (24) qui est disposée en particulier dans une zone périphérique au-dessus de l'ouverture de remplissage de café en poudre (17).

9. Groupe d'infusion selon au moins l'une quelconque des revendications 2 à 8, **caractérisé en ce que** le piston à double course (3) peut être déplacé au-delà de la position de dosage de café en poudre (II) vers le haut dans une position de dosage de produit de nettoyage.

10. Groupe d'infusion selon au moins l'une quelconque des revendications précédentes, **caractérisé en ce que** le piston élévateur (5) inférieur présente un élément de filtrage (14), grâce auquel le café infusé peut être filtré, et **en ce qu'**un espace de réception du café (15) relié à une conduite d'écoulement de café (13) pour le café filtré est disposé dans le piston élévateur inférieur au-dessous de l'élément de filtrage.

11. Groupe d'infusion selon au moins la revendication 10, **caractérisé en ce que** la conduite d'écoulement du café (13) s'étend depuis l'espace de réception du café (15) disposé dans le piston élévateur (5) inférieur vers le haut au travers du piston élévateur (4) supérieur.

12. Groupe d'infusion selon au moins l'une quelconque des revendications précédentes, **caractérisé en ce que** le piston élévateur (4) supérieur présente une ouverture d'entrée d'eau d'infusion (10) et/ou un élément de distribution de l'eau (11).
